Europäisches Patentamt

European Patent Office

Office européen des brevets

(11) Publication number: **0 207 604**

A1

(12) **EUROPEAN PATENT APPLICATION**

(21) Application number: 86303581.2

(22) Date of filing: 12.05.86

(51) Int. Cl.⁴: **B 62 D 5/04**

(30) Priority: 13.05.85 GB 8512057

(43) Date of publication of application:
07.01.87 Bulletin 87/2

(84) Designated Contracting States:
AT BE CH DE FR GB IT LI LU NL SE

(71) Applicant: GROUP LOTUS PLC

Norwich Norfolk NR14 8EZ(GB)

(72) Inventor: Williams, David Allen
Cranfield Institute of Technology
Cranfield Bedford(GB)

(72) Inventor: Wright, Peter Godfrey
Group Lotus plc
Norwich Norfolk NR14 8EZ(GB)

(74) Representative: Jones, Ian et al,
G. RATHBONE & CO. High Holborn House 52-54 High
Holborn
London WC1V 6RY(GB)

(54) Vehicle power assisted steering systems.

(57) A power assisted vehicle steering system comprises a sensor (25) providing an output dependent on the steering effect applied to a steering wheel (10) and an electric motor (16) responsive to the sensor output to apply a steering drive to a steerable vehicle wheel. The sensor and motor can be located in the region of the steering wheel and can be constituted as a kit for adding a power steering facility to a vehicle without one. The sensor output may be modified at will or in response to vehicle experience and a switch can be provided to render the system inoperative.

FIG.1.

EP 0 207 604 A1

-1-

# VEHICLE POWER ASSISTED STEERING SYSTEMS
## DESCRIPTION

The invention relates to power assisted steering systems for vehicles.

Road vehicles have conventionally been provided with hydro-mechanical power assisted steering systems. Such systems include an hydraulic system driven by the vehicle engine and a specially designed steering rack or steering box, require a large number of special parts and are incorporated in the vehicle during manufacture.

The present invention is concerned with the provision of a power assisted steering system which is simple and compact, so that it can be added to an existing vehicle without undue difficulty, although it can readily be incorporated as original vehicle equipment.

According to the invention, there is provided a power assisted vehicle steering system comprising a manually operable steering element, connection means for transmitting movement of the steering element to steering gear for turning one or more steerable wheels, the steering element being coupled to the connection means to the steering element by way of a sensor for sensing the force applied, and a motor for applying to the connection means an assisting force dependent on the sensor output.

The power assistance components of the system of the invention are located solely at its manual input end; the actual steering gear carrying the road vehicle can be

conventional.

Thus the torque manually applied to a vehicle steering column by way of the steering wheel can be sensed by means of a torque transducer and the transducer output used to control the application of an assisting torque to the column. The torque transducer can be located between the steering wheel and the steering column and the assisting force can be applied to the column by means of a direct drive torque motor, which may be fitted around the column, for example, just below the wheel.

Apart from a connection to the vehicle battery, the power assistance components are all located within the vehicle cabin. The invention can thus provide a kit comprising a torque transducer, a torque motor, and suitable circuitry operative between them, in a form for incorporation in an existing vehicle with only manual steering arrangements.

The power assistance components can if desired include a control switch so that the driver can employ them only when required, for example, when parking in restricted spaces and preferably the characteristics of the power assistance are adjustable selectively by the driver and/or in response to vehicle parameters, for example, speed.

The invention is further explained below, by way of illustration, with reference to the accompanying drawing, in which:

Figure 1 is a partial perspective view of a steering system in accordance with the invention, as seen from the front of a vehicle incorporating it;

Figure 2 is a like view on a larger scale of a torque motor assembly included in the system of Figure 1;

Figures 3A and B are like views respectively of internal parts of the system;

Figure 4 is a partial perspective view of the system viewed from the opposite direction, that is, looking in the normal direction of movement of the vehicle, and with a cover removed;   and

Figure 5 is a schematic circuit diagram of the system.

The illustrated steering system embodying the invention is that of a road vehicle for example a passenger motor car.   The system comprises a steering wheel 10 and a steering column 11 journalled in a mounting structure 12 secured to the vehicle.   The end of the steering column 11 remote from the steering wheel 10 is connected by way of universal joints 14 to a steering linkage 15 for steering the front wheels of a vehicle.   The part of the illustrated steering system constituted by the steering linkage 15 is conventional and is accordingly not further described.

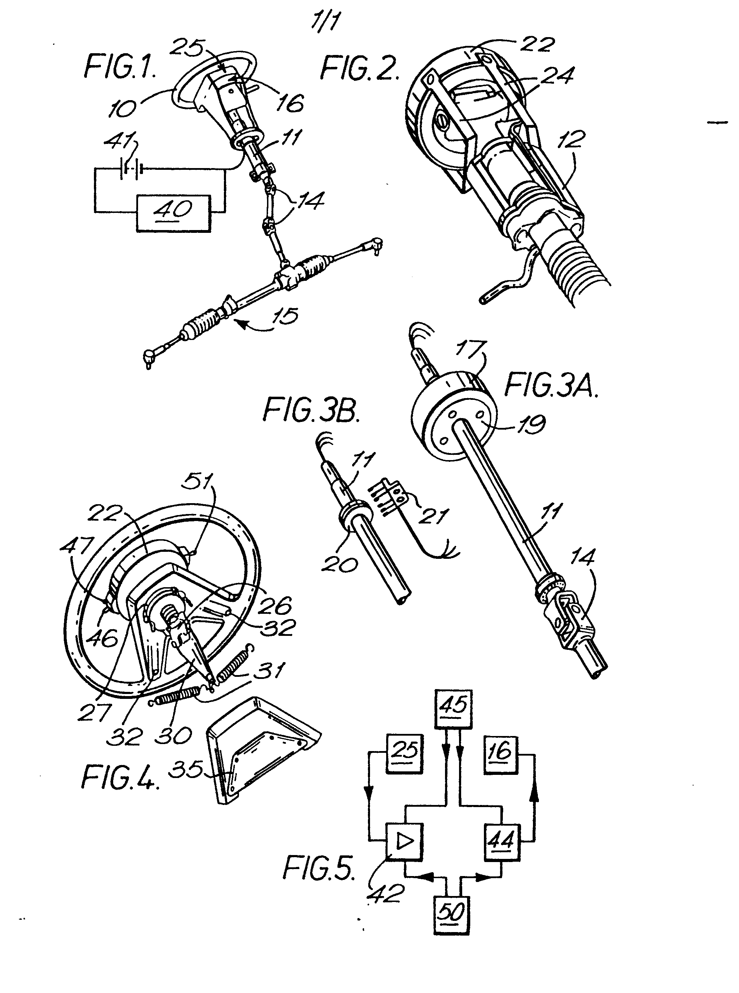

At a position immediately forward of the steering wheel 10, that is, beyond the wheel from the driver, there is located an electric motor 16 for rotationally driving the steering column 11.   The motor 16 is a frameless dc direct drive torque motor, having as shown in Figures 3A and 3B an armature/commutator 17 directly connected to the steering column by way of a mounting plate 19.   Also connected to the steering column is a slip ring 20 co-operating with a brush gear 21 mounted to a housing 22 for the motor which contains the stator windings of the motor and which is secured in place in the mounting structure 12 by means of  housing brackets 24.

Directly rearward of the steering wheel 10, between it and the driver, there is located a sensor 25 for sensing the torque applied manually to the wheel.   The sensor 25 is in the form of a torque transducer having a feedback wiper 26 which is fixed to the steering column 11, and which co-operates with a feedback track 27

-4-

attached to the steering wheel 10. An arm 30 projecting radially from the steering column 11 is connected to the steering wheel 10 by a pair of tension springs 31 which extend in opposite directions from the arm to anchorages 32 on the steering wheel at their other ends. The torque applied manually to the wheel is applied to the steering column by way of the springs 31 which provide an artificial "feel" for the driver. A cover 35 is connected to the steering wheel 10 to protect the parts of the sensor 25.

Manual rotation of the wheel 10 thus effects rotation of the column 11, and the transducer 25 provides an electrical output which is a measure of the torque manually applied to the column by way of the wheel. The torque transducer 25 and the motor 16 are connected into electric circuitry 40, shown in block diagram form in Figure 5, powered by the vehicle battery 41 and arranged to provide a current output for the stator of the motor 16 which determines the drive which the motor applies to the steering column 11. The power assistance components comprising the torque transducer 25, the circuitry 40 and the torque motor 16 act in parallel with the mechanical coupling of the steering wheel 10 to the column 11 through the transducer 25 to apply to the column an enhanced torque in dependence on the torque applied manually to the steering wheel 10.

As appears from Figure 5, the output of the transducer 25 is applied to a servo-amplifier 42. The amplifier output is taken through a shaping and control circuit 44 to the motor 16. The function of the signal shaping circuit means in the circuit 44 is to shape the output of the power amplifier 42 so that this has an appropriate non-linear characteristics. This characteristic, and also the gain of the amplifier 42 and the maximum current delivered to the torque motor 16 are preferably selectively variable by the driver. A manual control input device 45 is therefore provided, and this is operated by control elements 46 and 47 mounted on the motor housing 22. The control element 46 permits adjustment of gain and the element 47 permits control of current and thus of torque output. Similar control functions can additionally or instead be exercised in response to one or more vehicle parameters, for example speed, and control inputs to the circuitry 44 and/or to the amplifier 2 can accordingly be provided from one or more transducers 50 providing outputs dependent on such parameters.

The system illustrated can be arranged to be optionally employed, as by operation of an on-off switch 51 provided on the motor housing 22. In the event of any failure in the power assistance components, or if the driver chooses to de-energise these components where this facility is provided, steering is effected manually through the coupling of the wheel 10 to the column 11 by the transducer 25.

The components illustrated affording the power assistance need not be incorporated in the vehicle as original equipment, but could be added to an existing conventional vehicle. Because of the configuration of these components, the addition of them to an existing vehicle is a simple operation, requiring no modification of the steering system downstream of the steering column.

The invention will thus be seen to provide power assisted steering for a vehicle in a simple and convenient way, with the possibility of flexible control of operation.

CLAIMS

1. A power assisted vehicle steering system comprising steering gear with a manually operable steering element (10) for steering at least one steerable vehicle wheel, a sensor (25) providing an output dependent on the steering effort applied to the steering element (10), and electric power source (16) for operating the steering gear in dependence on the sensor output.

2. A system as claimed in claim 1 wherein the steering element comprises a steering wheel (10), the sensor (25) is responsive to the torque applied to the steering wheel, and the power source comprises an electric motor (16) for driving a steering column (11).

3. A power assistance system in the form of a kit for addition to a vehicle having a steering gear with a steering wheel (10) for turning a steering column (11) to steer at least one steerable vehicle road wheel, the system comprising a torque sensor (25) arranged to be installed so as to sense force applied to the steering column (11) by the steering wheel (10) and to supply an output to an electric motor (16) arranged to be installed so as to apply to the steering column (11) a turning force dependent on the sensor output.

4. A system as claimed in claim 2 or 3 wherein the sensor (25) and the motor (16) are located in proximity to the steering wheel (10).

5. A system as claimed in claim 2, 3 or 4 wherein the electric motor (16) comprises a direct drive torque motor having a rotor (17) secured to the steering column (11).

6. A system as claimed in claim 2, 3, 4 or 5 wherein the sensor (25) comprises a torque transducer having a wiper secured to the steering column and co-operating with a track secured to the steering wheel.

7. A system as claimed in claim 2, 3, 4 or 5 having artificial feel spring means (31) operative between the steering column (11) and the steering wheel (10).

8. A system as claimed in any preceding claim having a switch (51) whereby the system can be selectively rendered operative or inoperative.

9. A system as claimed in any preceding claim having control means (46,47,50) whereby the power applied to the steering gear by the power source (16) is selectively variable.

10. A system as claimed in any preceding claim having signal shaping means (44) responsive to driver control and/or to one or more vehicle performance parameters located between the sensor (25) and the motor (16).

0207604

1/1

FIG.1.
FIG.2.
FIG.3A.
FIG.3B.
FIG.4.
FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 125 918 (WILES et al.)  <br> * whole document * | 1-3,5, 8-10 | B 62 D 5/04 |
| X | DE-A-3 124 181 (SCHMIDT) <br> * claims 1, 2; figures 1-4 * | 1 | |
| A | | 2,5-7, 9,10 | |
| X | US-A-3 983 953 (BAYLE) <br><br> * abstract; figure 1 * | 1-3,5, 7 | |
| A | DE-B-2 925 156 (DAIMLER-BENZ) <br> * column 4, lines 18-32; figures 1, 2 * | 1-3 | |
| A | US-A-1 863 567 (FISHER) <br><br> * page 1, lines 1-40; figures 1, 2 * | 1,2,4, 5,8 | TECHNICAL FIELDS SEARCHED (Int. Cl.4) <br><br> B 62 D 5/00 |
| A | GB-A-2 082 524 (SKF NOVA AB) <br> * abstract; figure * | 1,4 | |

The present search report has been drawn up for all claims

| Place of search | Date of completion of the search | Examiner |
|---|---|---|
| BERLIN | 03-09-1986 | KRIEGER P O |